(19) Europäisches Patentamt / European Patent Office / Office européen des brevets

(11) **EP 4 117 349 A1**

(12) **EUROPEAN PATENT APPLICATION**
published in accordance with Art. 153(4) EPC

(43) Date of publication:
**11.01.2023 Bulletin 2023/02**

(21) Application number: **20922707.3**

(22) Date of filing: **06.03.2020**

(51) International Patent Classification (IPC):
**H04W 52/14** $^{(2009.01)}$    **H04W 52/24** $^{(2009.01)}$

(52) Cooperative Patent Classification (CPC):
**H04W 52/14; H04W 52/24**

(86) International application number:
**PCT/JP2020/009852**

(87) International publication number:
**WO 2021/176724 (10.09.2021 Gazette 2021/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Chiyoda-ku
Tokyo 100-6150 (JP)**

(72) Inventors:
• **MATSUMURA, Yuki**
  **Tokyo 100-6150 (JP)**
• **NAGATA, Satoshi**
  **Tokyo 100-6150 (JP)**
• **WANG, Jing**
  **Beijing 100190 (CN)**
• **HOU, Xiaolin**
  **Beijing 100190 (CN)**

(74) Representative: **Hoffmann Eitle**
**Patent- und Rechtsanwälte PartmbB
Arabellastraße 30
81925 München (DE)**

(54) **TERMINAL, WIRELESS COMMUNICATION METHOD, AND BASE STATION**

(57)     A terminal according to an aspect of the present disclosure includes: a receiving section that receives first information indicating a Path-loss used for transmission power control; and a control section that calculates, based on the Path-loss, transmission power of an uplink (UL) signal to a reception point that does not transmit downlink data. According to an aspect of the present disclosure, transmission power of a UL signal can be appropriately determined.

FIG. 5

## Description

Technical Field

The present disclosure relates to a terminal, a radio communication method, and a base station in next-generation mobile communication systems.

Background Art

In a Universal Mobile Telecommunications System (UMTS) network, Long Term Evolution (LTE) has been standardized for the purpose of higher data rate, lower delay, and the like (Non Patent Literature 1). In addition, LTE-Advanced (3GPP Rel. 10-14) has been standardized for the purpose of further increasing the capacity and sophistication of LTE (Third Generation Partnership Project (3GPP) Release (Rel.) 8, 9).

Successor systems to LTE (for example, also referred to as 5th generation mobile communication system (5G), 5G+ (plus), 6th generation mobile communication system (6G), New Radio (NR), or 3GPP Rel. 15 or later) are also being studied.

In the existing LTE system (For example, 3GPP Rel. 8-14), a user terminal (User Equipment (UE)) transmits uplink control information (UCI) using at least one of a UL data channel (for example, Physical Uplink Shared Channel (PUSCH)) and a UL control channel (for example, Physical Uplink Control Channel (PUCCH)).

Citation List

Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010.

Summary of Invention

Technical Problem

In a radio communication system such as Rel. 15 NR, coverage varies depending on uplink (UL), downlink (DL), channel, and the like. In order to improve the coverage of the UL signal (UL channel), it has been examined to provide reception points for the UL signal in addition to transmission/reception points.

However, it is not clear how to determine transmission power to the transmission/reception points or the reception points. If the transmission power is not appropriately determined, system performance is likely be deteriorated, for example, the coverage is limited or throughput decreases.

Therefore, an object of the present disclosure is to provide a terminal, a radio communication method, and a base station that appropriately determine transmission power of a UL signal.

Solution to Problem

A terminal according to an aspect of the present disclosure includes: a receiving section that receives first information indicating a Path-loss used for transmission power control; and a control section that calculates, based on the Path-loss, transmission power of an uplink (UL) signal to a reception point that does not transmit downlink data.

Advantageous Effects of Invention

According to an aspect of the present disclosure, transmission power of a UL signal can be appropriately determined.

Brief Description of Drawings

FIG. 1A is a diagram illustrating an arrangement example of general transmission/reception points. FIG. 1B is a diagram illustrating a UL high density arrangement example.
FIG. 2 is a diagram illustrating a resource utilization method A.

FIG. 3 is a diagram illustrating a resource utilization method B.

FIG. 4A is a diagram illustrating an example of association between RS indexes and PL values. FIG. 4B is a diagram illustrating an example of association between RS indexes and delta PL values.

FIG. 5 is a diagram illustrating an example of an operation procedure after initial access.

FIG. 6 is an example in which a UE transmits a plurality of beams to the same reception point.

FIG. 7 is an example in which the UE transmits a plurality of beams to different reception points.

FIG. 8 is a diagram illustrating an example in which a UL signal is transmitted to a reception point.

FIG. 9 is a diagram illustrating an example in which a UL signal is transmitted to a central TRP.

FIG. 10 is a diagram illustrating an example of association between RS indexes and a plurality of PL values/delta PL values.

FIG. 11 is a transmission example of a UL signal corresponding to FIG. 10.

FIG. 12 is a diagram illustrating a first example of association between RS indexes and one PL/delta PL parameter.

FIG. 13 is a transmission example of a UL signal corresponding to FIG. 12.

FIG. 14 is a diagram illustrating a second example of association between PL/delta PL parameters and RS indexes.

FIG. 15 is a transmission example of a UL signal corresponding to FIG. 14.

FIG. 16 is a diagram illustrating a third example of association between PL/delta PL parameters and RS indexes.

FIG. 17 is a transmission example of a UL signal corresponding to FIG. 16.

FIG. 18 is a diagram illustrating an example of a schematic configuration of a radio communication system according to an embodiment.

FIG. 19 is a diagram illustrating an example of a configuration of a base station according to the embodiment.

FIG. 20 is a diagram illustrating an example of a configuration of a user terminal according to the embodiment.

FIG. 21 is a diagram illustrating an example of a hardware configuration of the base station and the user terminal according to the embodiment.

Description of Embodiments

(Transmission power control)

<Transmission Power Control for PUSCH>

In NR, transmission power of PUSCH is controlled based on a TPC command (also referred to as value, increase/decrease value, correction value, or the like) indicated by a value of a given field (also referred to as TPC command field or the like) in a DCI.

For example, when a UE transmits the PUSCH on an active UL BWP b of a carrier f of a serving cell c using a parameter set (open loop parameter set) having an index j and an index 1 of a power control adjustment state (PUSCH power control adjustment state), transmission power ($P_{\mathrm{PUSCH},\,b,\,f,\,c}$ (i, j, $q_d$, 1)) of the PUSCH in a PUSCH transmission occasion (also referred to as transmission period or the like) i may be represented by the following Expression (1). The power control adjustment state may be referred to as value based on a TPC command of a power control adjustment state index l, cumulative value of a TPC command, or value by a closed loop. l may be referred to as closed loop index.

In addition, the PUSCH transmission occasion i is a period during which the PUSCH is transmitted and may be configured by, for example, one or more symbols, one or more slots, or the like.

[Math. 1]

Expression (1)

$$P_{\mathrm{PUSCH},b,f,c}(i,j,q_d,l)$$

$$= min \left\{ \begin{array}{l} P_{\mathrm{CMAX},f,c}(i), \\ P_{\mathrm{O\_PUSCH},b,f,c}(j) + 10\,log_{10}(2^{\mu} \cdot M_{\mathrm{RB},b,f,c}^{\mathrm{PUSCH}}(i)) + \alpha_{b,f,c}(j) \cdot PL_{b,f,c}(q_d) + \Delta_{\mathrm{TF},b,f,c}(i) + f_{b,f,c}(i,l) \end{array} \right\}$$

Here, $P_{\mathrm{CMAX},f,C}(i)$ is, for example, transmission power (also referred to as maximum transmission power, UE maximum output power, or the like) of a user terminal set for a carrier f of a serving cell c in the transmission occasion i. $P_{\mathrm{O\_PUSCH},b,f,c}(j)$ is, for example, a parameter (for example, also referred to as parameter concerning a transmission power offset, transmission power offset P0, target received power parameter, or the like) related to target received power set for the active UL BWP b of the carrier f of the serving cell c in the parameter set setting j.

$M_{\mathrm{RB},b,f,c}^{\mathrm{PUSCH}}(i)$ is, for example, the number of resource blocks (bandwidth) allocated to the PUSCH for the transmission occasion i in the active UL BWP b of the carrier f with the serving cell c and a subcarrier interval $\mu$ . $\alpha_{b,f,c}(j)$ is a value (for example, also referred to as msg3-Alpha, p0-PUSCH-Alpha, a fractional factor, or the like) provided by a higher layer parameter.

$PL_{b,f,c}(q_d)$ is, for example, a Path-loss (Path-loss compensation) calculated by a user terminal using an index $q_d$ of a reference signal (reference signal (RS), Path-loss reference RS, Path-loss reference RS, DL RS for Path-loss measurement, PUSCH-PathlossReferenceRS) for a downlink BWP associated with the active UL BWP b of the carrier f of the serving cell c.

$\Delta_{TF,\,b,f,c}(i)$ is a transmission power adjustment component (offset, transmission format compensation) for the UL BWP b of the carrier f of the serving cell c.

$f_{b,f,c}(i,l)$ is a PUSCH power control adjustment state for the active UL BWP b of the carrier f of the serving cell c in the transmission occasion i. For example, $f_{b,f,c}(i,l)$ may be represented by Expression (2).

[Math. 2]

Expression (2)

$$f_{b,f,c}(i, l) = f_{b,f,c}(i - i_0, l) + \sum_{m=0}^{C(D_i)-1} \delta_{\mathrm{PUSCH},b,f,c}(m, l)$$

Here, $\delta_{\mathrm{PUSCH},b,f,c}(i,l)$ may be a TPC command value included in a DCI format 0_0 or the DCI format 0_1 for scheduling the PUSCH transmission occasion i on the active UL BWP b of the carrier f of the serving cell c or a TPC command value encoded in combination with another TPC command in a DCI format 2-2 having CRC scrambled with a specific RNTI (Radio Network Temporary Identifier) (for example, TPC-PUSCH-RNTI).

$\sum_{m=0}^{C(Di)-1}\delta_{\mathrm{PUCCH},f,c}(m,l)$ may be a total of TPC command values in a set Di of TPC command values having a cardinality $C(D_i)$. $D_i$ may be a set of TPC command values that the UE receives between $K_{\mathrm{PUSCH}}$ (i-i₀) -1 symbols before a PUSCH transmission occasion i-i₀ and $K_{\mathrm{PUSCH}}$ (i) symbols before the PUSCH transmission occasion i on the active UL BWP b of the carrier f of the serving cell c with respect to the PUSCH power control adjustment state 1. i₀ may be a smallest positive integer with which $K_{\mathrm{PUSCH}}$(i-i₀) symbols before the PUSCH transmission occasion i-i₀ is earlier than $K_{\mathrm{PUSCH}}$(i) symbols before the PUSCH transmission occasion i.

If PUSCH transmission is scheduled by a DCI format 0_0 or a DCI format 0_1, $K_{\mathrm{PUSCH}}$(i) may be the number of symbols in the active UL BWP b of the carrier f of the serving cell c after the last symbol of corresponding PDCCH reception and before the first symbol of corresponding PUSCH transmission. If PUSCH transmission is set by setting grant configuration information (ConfiguredGrantConfig), $K_{\mathrm{PUSCH}}$(i) may be the number of $K_{\mathrm{PUSCH,min}}$ symbols equal to a product of the number of symbols per slot $N_{symb}^{slot}$ and the minimum value of values provided by k2 in a PUSCH common configuration information (PUSCH-ConfigCommon) in the active UL BWP b of the carrier f of the serving cell c.

Whether a power control adjustment state has a plurality of states (for example, two states) or a single state may be set by a higher layer parameter. Further, when a plurality of power control adjustment states are set, one of the plurality of power control adjustment states may be identified by an index 1 (for example, $l \in \{0,1\}$).

When the UE is not provided with a Path-loss reference RS (for example, PUSCH-PathlossReferenceRS) or when the UE is not provided with individual higher layer parameters, the UE may calculate $PL_{b,f,c}(q_d)$ using RS resources from a synchronization signal (SS)/physical broadcast channel (PBCH) block (SS block (SSB)) used to obtain a Master Information Block (MIB).

If the UE has configured a number of RS resource indices up to a value of a maximum number of Path-loss reference RSs (for example, maxNrofPUSCH-PathlossReferenceRSs) and a respective set of RS configurations for the RS resource indices by way of the Path-loss reference RSs, the set of RS resource indices may comprise one or both of a set of SS/PBCH block indices and a set of channel state information (CSI)-reference signal (RS) resource indices. The UE may identify an RS resource index $q_d$ in the set of RS resource indices.

If the PUSCH transmission was scheduled by a Random Access Response (RAR) UL grant, the UE may use the same RS resource index $q_d$ as for the corresponding PRACH transmission.

In a case where the UE is provided with a configuration of PUSCH power control (for example, SRI-PUSCH-PowerControl) based on a sounding reference signal (SRS) resource indicator (SRI) and is provided with one or more Path-loss reference RS ID values, the UE may obtain mapping between a set of values for the SRI field in DCI format 0_1 and a set of Path-loss reference RS ID values from higher layer signaling (for example, sri-PUSCH-PowerControl-Id in SRI-PUSCH-PowerControl). The UE may determine an RS resource index $q_d$ from the Path-loss reference RS IDs mapped against SRI field values in DCI format 0_1 that schedules a PUSCH.

If the PUSCH transmission is scheduled by the DCI format 0_0 and the UE is not provided with PUCCH spatial relation information for the PUCCH resource with the lowest index for each carrier f and the active UL BWP b for the serving cell c, the UE may use the same RS resource index $q_d$ as the PUCCH transmission in that PUCCH resource.

If the PUSCH transmission is scheduled by the DCI format 0-0 and the UE is not provided with the spatial setting for the PUCCH transmission, or if the PUSCH transmission is scheduled by the DCI format 0_1 which does not include the SRI field, or if the configuration of the power control for the PUSCH by the SRI is not provided to the UE, the UE may use the RS resource index $q_d$ with the ID of the Path-loss reference RS of zero.

For PUSCH transmission configured by a configuration grant configuration (for example, ConfiguredGrantConfig), if the configuration grant configuration includes a given parameter (for example,rrc-ConfiguredUplinkGrant), the RS resource index $q_d$ may be provided to the UE by a Path-loss reference index (for example, pathlossReferenceIndex) within the given parameter.

For PUSCH transmission configured by the configuration grant configuration, if the configuration grant configuration does not include the given parameter, the UE may determine the RS resource index $q_d$ from the value of the ID of the Path-loss reference RS mapped to the SRI field in the DCI format that activates the PUSCH transmission. If the DCI format does not include the SRI field, the UE may determine the RS resource index $q_d$ with the ID of the zero Path-loss reference RS.

Expressions (1) and (2) are merely examples, and the expressions are not limited thereto. The user terminal may control the transmission power of the PUSCH based on at least one parameter exemplified in Expressions (1) and (2), and an additional parameter may be included, or some parameters may be omitted. In addition, in Expressions (1) and (2), the transmission power of the PUSCH is controlled for each active UL BWP of a given carrier of a given serving cell, but the present invention is not limited thereto. At least a part of the serving cell, the carrier, the BWP, and the power control adjustment state may be omitted.

<PUCCH Transmission Power Control>

In the NR, the transmission power of the PUCCH is controlled based on a TPC command (also referred to as a value, an increased/decreased value, a correction value, an instruction value, and the like) indicated by a value of a given field (also referred to as a TPC command field, a first field, and the like) in the DCI.

For example, using the index 1 of the power control adjustment state (PUCCH power control adjustment state), the transmission power ($P_{\text{PUCCH},b,f,c}(i,q_u,q_d,l)$ ) of the PUCCH in the PUCCH transmission occasion (also referred to as a transmission period or the like) i for the active UL BWP b of the carrier f of the serving cell c may be expressed by Expression (3) below. The power control adjustment state may be referred to as value based on a TPC command of a power control adjustment state index l, cumulative value of a TPC command, or value by a closed loop. l may be referred to as closed loop index.

Further, the PUCCH transmission occasion i is a period during which the PUCCH is transmitted, and may include, for example, one or more symbols and one or more slots.

[Math. 3]

Expression (3)

$$P_{\text{PUCCH},b,f,c}(i, q_u, q_d, l)$$

$$= min \begin{Bmatrix} P_{\text{CMAX},f,c}(i), \\ P_{\text{O\_PUCCH},b,f,c}(q_u) + 10\,log_{10}(2^\mu \cdot M_{\text{RB},b,f,c}^{\text{PUCCH}}(i)) + PL_{b,f,c}(q_d) + \Delta_{\text{F\_PUCCH}}(F) + \Delta_{\text{TF},b,f,c}(i) + g_{b,f,c}(i,l) \end{Bmatrix}$$

Here, $P_{\text{CMAX},f,c}(i)$ is, for example, transmission power (also referred to as maximum transmission power, UE maximum output power, or the like) of a user terminal set for a carrier f of a serving cell c in the transmission occasion i. $Po_{\text{\_PUCCH},b,f,c}(q_u)$ is, for example, a parameter (for example, it is also referred to as a parameter related to a transmission power offset, a transmission power offset P0, a target received power parameter, or the like) related to the target received power set for the active UL BWP b of the carrier f of the serving cell c in the transmission occasion i.

$M^{\text{PUCCH}}_{\text{RB},b,f,c}(i)$ is, for example, the number of resource blocks (bandwidth) allocated to the PUCCH for the transmission occasion i in the active UL BWP b of the carrier f with the serving cell c and the subcarrier interval $\mu$. $PL_{b,f,c}(q_d)$ is, for example, a Path-losscalculated by the user terminal by using index $q_d$ of a reference signal (a Path-loss reference RS, an RS for Path-loss reference, a DL-RS for Path-loss measurement, or PUCCH-PathlossReferenceRS) for a downlink BWP associated with active UL BWP b of carrier f of serving cell c.

$\Delta_{\text{F\_PUCCH}}(F)$ is a higher layer parameter given for each PUCCH format. $\Delta_{\text{TF},b,f,c}(i)$ is a transmission power adjustment component (offset) for the UL BWP b of the carrier f of the serving cell c.

$g_{b,f,c}(i,l)$ are values (for example, the power control adjustment state, the cumulative value of the TPC command, the closed-loop value, and the PUCCH power adjustment state) based on the TPC command of the power control adjustment state index 1 of the active UL BWP of the carrier f of the serving cell c and the transmission occasion i. For example, $g_{b,f,c}(i,l)$ may be expressed by Expression (4).

$g_{b,f,c}(i,l)$ is a PUCCH power control adjustment state for the active UL BWP b of the carrier f of the serving cell c in the transmission occasion i. For example, $g_{b,f,c}(i,l)$ may be expressed by Expression (4).

[Math. 4]

Expression (4)

$$g_{b,f,c}(i,l) = g_{b,f,c}(i - i_0, l) + \sum_{m=0}^{C(c_i)-1} \delta_{\text{PUCCH},b,f,c}(m,l)$$

Here, $\delta_{\text{PUCCH},b,f,c}(i,l)$ is a TPC command value and is included in DCI format 1_0 or DCI format 1_1 detected by the UE in the PUCCH transmission occasion i of the active UL BWP b of the carrier f of the serving cell c, or may be combined and encoded with another TPC command in DCI format 2_2 having CRC scrambled by a specific radio network temporary identifier (RNTI) (for example, TPC-PUSCH-RNTI).

$\sum_{m=0}^{C(Ci)-1} \delta_{\text{PUCCH},b,f,c}(m,l)$ may be the sum of TPC command values in a set Ci of TPC command values having a cardinality C(Ci). Ci may be a set of TPC command values that the UE receives between $K_{\text{PUCCH}}(i-i_0)-1$ symbols before PUCCH transmission occasion i-io and $K_{\text{PUCCH}}(i)$ symbols before PUSCH transmission occasion i of the active UL BWP b of carrier f of the serving cell c with respect to the PUCCH power control adjustment state 1. io may be a smallest positive integer, where $K_{\text{PUCCH}}(i-i_0)$ symbols before the PUSCH transmission occasion i-io is earlier than $K_{\text{PUCCH}}(i)$ symbols before the PUSCH transmission occasion i.

If the PUCCH transmission responds to the detection of DCI format 1_0 or DCI format 1_1 by the UE, $K_{\text{PUCCH}}(i)$ may be the number of symbols in the active UL BWP b for carrier f of the serving cell c after the last symbol of the corresponding PDCCH reception and before the first symbol of the PUCCH transmission. If PUCCH transmission is configured by the configuration grant configuration information (ConfiguredGrantConfig), $K_{\text{PUSCH}}(i)$ may be the number of $K_{\text{PUCCH,min}}$ symbols equal to the product of the number of symbols per slot $N_{\text{symb}}^{\text{slot}}$ and the minimum value of the value provided by k2 in the PUSCH common configuration information (PUSCH-ConfigCommon) in the active UL BWP b of the carrier f of the serving cell c.

If the UE is provided with the information indicating that the two PUCCH power control adjustment states are used (two PUCCH-PC-AdjustmentStates) and the PUCCH spatial relation information (PUCCH-SpatialRelationInfo), 1 = {0, 1}, and if the UE is not provided with the information indicating that the two PUCCH power control adjustment states are used or the PUCCH spatial relation information, 1 = 0.

If the UE obtains the TPC command value from the DCI format 1_0 or 1_1, and if the UE is provided with the PUCCH spatial relation information, the UE may obtain a mapping between the PUCCH spatial relation information ID (pucch-SpatialRelationInfoId) value and the Closed Loop Index (closedLoopIndex, power adjustment state index 1) by means of the index provided by the P0 ID for PUCCH (p0-PUCCH-Id in p0-Set in PUCCH-PowerControl in PUCCH-Config). If the UE receives an activation command that includes the value of the PUCCH spatial relation information ID, the UE may determine the value of the closed-loop index that provides the value of 1 through the link to the corresponding PUCCH P0 ID.

If the UE is provided with, for active UL BWP b of carrier f of serving cell c, a configuration of the $P_{\text{O\_PUCCH},b,f,c}(q_u)$ value for the corresponding PUCCH power adjustment state 1 by a higher layer, $g_{b,f,c}(i, 1) = 0$, and k = 0, 1,..., i. If the UE is provided with the PUCCH spatial relation information, the UE may determine the value of 1 from the value of $q_u$ based on the PUCCH spatial relation information associated with the PUCCH P0 ID corresponding to $q_u$ and the closed-loop index value corresponding to 1.

$q_u$ may be a PUCCH P0_ID (p0-PUCCH-Id) indicating the PUCCH P0 (P0-PUCCH) in the PUCCH P0 set (p0-Set).

Expressions (3) and (4) are merely examples, and the present invention is not limited thereto. The user terminal may control the transmission power of the PUCCH based on at least one parameter exemplified in Expressions (3) and (4), and an additional parameter may be included, or some parameters may be omitted. In addition, in Expressions (3) and (4), the transmission power of the PUCCH is controlled for each active UL BWP of a given carrier of a given serving cell, but the present invention is not limited thereto. At least a part of the serving cell, the carrier, the BWP, and the power control adjustment state may be omitted.

<SRS transmission power control>

For example, using the index 1 of the power control adjustment state, the transmission power ($P_{SRS,b,f,c}(i,q_s,l)$) of the SRS in the SRS transmission occasion (also referred to as a transmission period or the like) i for the active UL BWP b of the carrier f of the serving cell c may be expressed by Expression (5) below. The power control adjustment state may be referred to as value based on a TPC command of a power control adjustment state index 1, cumulative value of a TPC command, or value by a closed loop. 1 may be referred to as closed loop index.

Further, the SRS transmission occasion i is a period during which the SRS is transmitted, and may include, for example, one or more symbols and one or more slots.

[Math. 5]

Expression (5)

$$P_{SRS,b,f,c}(i, q_s, l)$$

$$= min \begin{Bmatrix} P_{CMAX,f,c}(i), \\ P_{O\_SRS,b,f,c}(q_s) + 10\, log_{10}(\, 2^\mu \cdot M_{SRS,b,f,c}(i)) + \alpha_{SRS,b,f,c}(q_s) \cdot PL_{b,f,c}(q_d) + h_{b,f,c}(i,l) \end{Bmatrix}$$

Here, $P_{CMAX,f,c}(i)$ is, for example, UE maximum output power for the carrier f of the serving cell c in the SRS transmission occasion i. $P_{O\_SRS,b,f,c}(q_s)$ is a parameter (for example, it is also referred to as a parameter related to a transmission power offset, a transmission power offset P0, a target received power parameter, or the like) related to the target received power provided by p0 with respect to the active UL BWP b of the carrier f of the serving cell c and the SRS resource set $q_s$ (provided by SRS-ResourceSet and SRS-ResourceSetId).

$M_{SRS,b,f,c}(i)$ is an SRS bandwidth represented by the number of resource blocks for the SRS transmission occasion i on the active UL BWP b of the carrier f with the serving cell c and the subcarrier spacing $\mu$.

$\alpha_{SRS,b,f,c}(q_s)$ is provided by $\alpha$ (for example, alpha) for the active UL BWP b for the serving cell c and the carrier f with the subcarrier spacing $\mu$ and the SRS resource set $q_s$.

$PL_{b,f,c}(q_d)$ is a DL Path-loss estimation value [dB] calculated by the UE using the RS resource index $q_d$ for the active DL BWP of the serving cell c and the SRS resource set $q_s$. The RS resource index $q_d$ is a Path-loss reference RS (Path-loss reference RS, Path-loss measurement DL-RS, for example, provided by pathlossReferenceRS) associated with the SRS resource set $q_s$, and is an SS/PBCH block index (for example, ssb-Index) or a CSI-RS resource index (for example, csi-RS-Index).

$h_{b,f,c}(i,l)$ are the SRS power control adjustment states for the active UL BWP for the carrier f of the serving cell c in the SRS transmission occasion i. When the setting of the SRS power control adjustment state (for example, srs-PowerControlAdjustmentStates) indicates the same power control adjustment state for the SRS transmission and the PUSCH transmission, the current PUSCH power control adjustment state is $f_{b,f,c}(i,l)$. On the other hand, when the setting of the SRS power control adjustment state indicates the power control adjustment state independent of the SRS transmission and the PUSCH transmission, and the setting of the TPC accumulation is not provided, the SRS power control adjustment states $h_{b,f,c}(i)$ may be expressed by Expression (6).

[Math. 6]

Expression (6)

$$h_{b,f,c}(i) = h_{b,f,c}(i-1) + \sum_{m=0}^{C(S_i)-1} \delta_{SRS,b,f,c}(m)$$

Here, $\delta_{SRS,b,f,c}(m)$ may be a TPC command value encoded in combination with another TPC command in the PDCCH having the DCI (for example, DCI format 2_3). $\sum_m=0^{C(Si)-1}\delta_{SRS,b,f,c}(m)$ may be the sum of TPC commands in the set $S_i$ of TPC command values with cardinality C(Si) that the UE receives between $K_{SRS}(i-i_0)-1$ symbols before the SRS transmission occasion $i-i_0$ and $K_{SRS}(i)$ symbols before the SRS transmission occasion i on the active UL BWP b of the carrier f with the serving cell c and the subcarrier spacing $\mu$. Here, io may be a minimum positive integer, where $K_{SRS}(i-i_0)-1$ symbols before the SRS transmission occasion i-io is earlier than $K_{SRS}(i)$ symbols before the SRS transmission occasion i.

If the SRS transmission is aperiodic, $K_{SRS}(i)$ may be the number of symbols in the active UL BWP b of the carrier f of the serving cell c after the last symbol of the corresponding PDCCH triggering the SRS transmission and before the first symbol of the SRS transmission. If the SRS transmission is semi-persistent or periodic, the $K_{SRS}(i)$ may be the number of $K_{SRS,min}$ symbols equal to the product of the number of symbols per slot $N_{symb}^{slot}$ and the minimum value of the value provided by k2 in the PUSCH common configuration information (PUSCH-ConfigCommon) in the active UL BWP b of the carrier f of the serving cell c.

Expressions (5) and (6) are merely examples, and the expressions are not limited thereto. The user terminal may control the transmission power of the SRS based on at least one parameter exemplified in Expressions (5) and (6), and an additional parameter may be included, or some parameters may be omitted. In addition, in Expressions (5) and (6), the transmission power of the SRS is controlled for each BWP of a given carrier of a given cell, but the present invention is not limited thereto. At least a part of the cell, the carrier, the BWP, and the power control adjustment state may be omitted.

(UL Coverage)

In Rel. 15 NR, coverages (reach distances) of PUSCH, PUCCH, PRACH, PDSCH, PDCCH, and PBCH are not uniform. Especially at high frequencies, the coverage of the PUSCH is limited. In a future radio communication system (for example, Rel. 16, Rel. 17, or later), improvement of at least one of UL coverage and UL throughput has been examined.

In order to expand the UL coverage, it has been examined to provide reception points in addition to general transmission/reception points. Therefore, an arrangement example of general transmission/reception points and an arrangement example (UL high density arrangement) in which reception points are provided are explained.

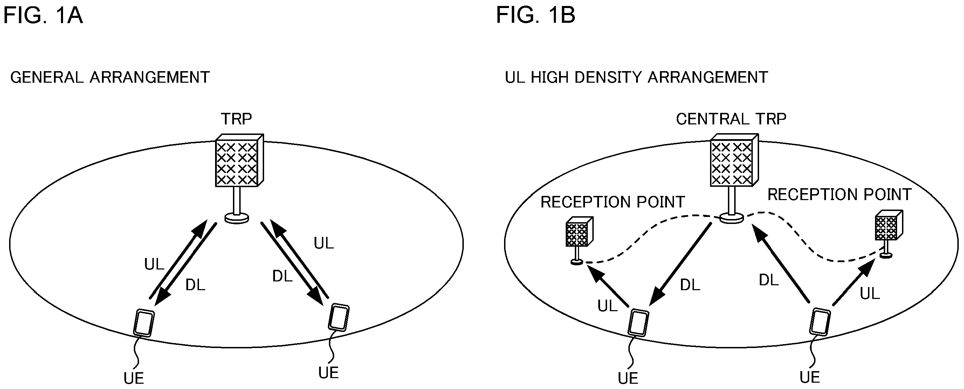

FIG. 1A is a diagram illustrating an arrangement example of general transmission/reception points. In FIG. 1A, a UE receives a DL signal from a TRP and transmits a UL signal to the TRP. For example, when the UE and the TRP are far from each other, a Path-loss is large and the communication quality is likely to be deteriorated.

FIG. 1B is a diagram illustrating a UL high density arrangement example. In order to expand UL coverage, it has been examined to provide reception points illustrated in FIG. 1B in addition to transmission/reception points illustrated in FIG. 1A. In FIG. 1B, the UE receives a DL signal from a central TRP corresponding to a macro cell and sends a UL signal to a reception point (for example, a reception point closest to the UE).

By using the UL dense arrangement illustrated in FIG. 1B, both of coverage and a UL data rate can be improved by reducing a Path-loss, improving UL signaling quality, and obtaining a higher coding rate compared with the general arrangement illustrated in FIG. 1A. In addition, since the reception points mainly perform reception, required functions are reduced and cost is reduced compared with transmission/reception points corresponding to a general small cell.

It has been examined that the reception points share the same cell ID when the high-density arrangement illustrated in FIG. 1B is used. For resource use in this case, for example, the following two methods are conceivable.

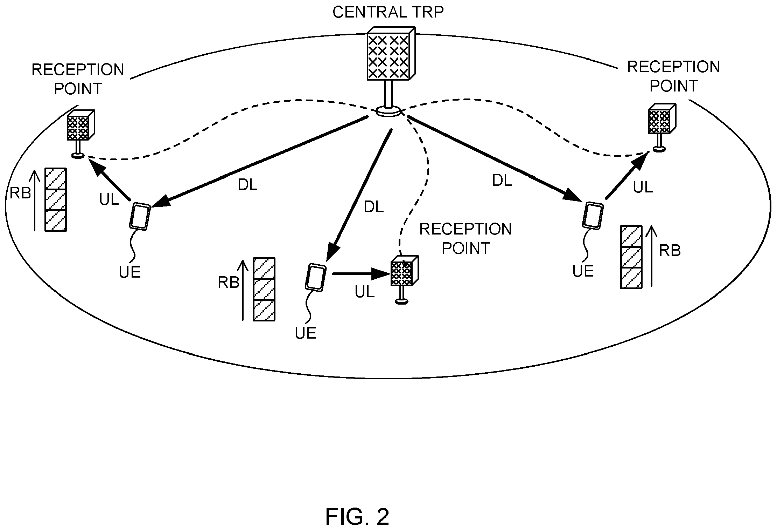

FIG. 2 is a diagram illustrating a resource utilization method A. In an example illustrated in FIG. 2, reception points reuse resources. Specifically, a plurality of reception points (UEs using the reception points) simultaneously use the same RB. In this example, resource use efficiency is high but multi-user interference needs to be considered.

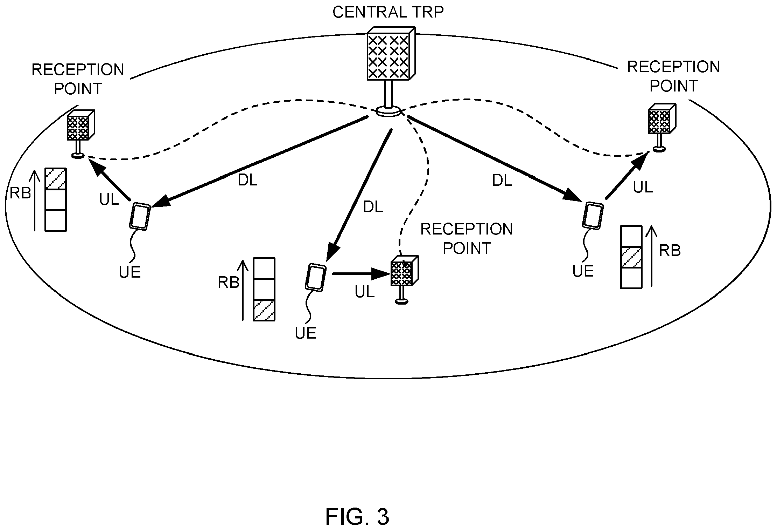

FIG. 3 is a diagram illustrating a resource utilization method B. In an example illustrated in FIG. 3, reception points do not reuse resources. Specifically, one RB is used only for one reception point (a UE using the reception point) at a given time. In this example, resource use efficiency is low but the example is simpler than the example illustrated in FIG. 2 and interference can be reduced.

<Estimation of a Path-loss>

The UE estimates path a loss ($PL_{b, f, c}(q_d)$) based on the resource index ($q_d$) of the DL RS. For example, various examples such as (1) to (6) below are conceivable for the DL RS (resource index $q_d$) used for Path-loss estimation.

(1) A Path-loss RS (SSB or CSI-RS) set by at least one of RRC and MAC CE from the network.
(2) SSB for initial access (SSB used to obtain MIB). (When Path-loss RS is not set)
(3) SSB/CSI-RS corresponding to PRACH transmission.
(4) Path-loss RS mapped to an SRI field indicated by DCI.
(5) SSB/CSI-RS corresponding to PUCCH transmission using the lowest index PUCCH resource.
(6) RS resource in which TCI state/QCL assumption of CORESET is "QCL-TypeD" (the CORESET has the lowest index in an active DL BWP of a scheduling cell of a serving cell.). Alternatively, the RS resource in which a TCI state of an active PDSCH is "QCL-TypeD" and an ID is the lowest.

However, when the DL RS used for Path-loss estimation (calculation) is not transmitted from a high density reception point, it is a problem how the UE estimates a Path-loss. When a Path-loss cannot be appropriately estimated (determined), transmission power cannot be appropriately determined.

Therefore, the present inventors have conceived a radio communication method for appropriately determining transmission power of a UL signal.

Embodiments relating to the present disclosure are explained in detail below with reference to the drawings. Radio communication methods according to the embodiments may be respectively applied alone or may be applied in combination. Note that, in the present disclosure, "A/B" and "at least one of A and B" may be interchangeable.

In the present disclosure, a transmission/reception point, a transmission/reception point (TRP), a central TRP, a transmission and reception point, a main TRP, a transmission/reception (Tx and Rx) cell, a transmission/reception component carrier (CC), a transmission/reception bandwidth part (BWP), a first point, a primary point, and a first base station may be replaced with one another. In the present disclosure, a reception point, a reception point (RP), a reception (Rx) point, a high-density reception point, a distributed TRP, an additional TRP, a restrictive TRP, a reception cell, a reception CC, a reception BWP, a second point, a secondary point, and a second base station may be replaced with one another.

The reception point may be connected to a TRP (for example, a base station) or a core network via wire or radio. The reception point may be treated as a network (NW) or a base station. The reception point may be capable of transmitting downlink (DL) signals and may be applied to a base station forming a macro cell. For example, the reception point may not transmit downlink data but may transmit control signals/channels.

The reception point may not include a part of the configuration of the central TRP (capabilities, functions, and the like). At the reception point, at least one function of transmission of DL control information, transmission of DL data, transmission of an SS/PBCH block, and DL transmission may be omitted. The number of components of at least one of an antenna, a panel, an antenna element, and a radio frequency (RF) section (RF chain, RF circuit) at the reception point may be smaller than the number of components at the central TRP. The maximum transmission power of the reception point may be lower than the maximum transmission power of the central TRP. The UE may receive a DL signal (for example, PDCCH, PDSCH, SS/PBCH block) from the central TRP and transmit a UL signal (for example, PUCCH, PUSCH, SRS) based on the DL signal to the reception point.

In the present disclosure, a TRP, an RS group, an antenna port group, and a control resource set (CORESET) group may be replaced with one another.

In the present disclosure, UL high-density arrangement, a distributed TRP mode, a separated location mode of transmission/reception points, a distributed transmission/reception mode, a separated TRP mode, a TRP type 1, a TRP type 2, a TRP type A, and a TRP type B may be replaced with one another.

In the present disclosure, the SRS may be at least one of A-SRS, P-SRS, and SP-SRS.

In the present disclosure, a Path-loss reference RS, a Path-loss reference RS for PUSCH, a Path-loss reference RS for PUCCH, a Path-loss reference RS for SRS, SSB, CSI-RS, and RS may be replaced with one another.

In the present disclosure, a Path-loss, a Path-loss value, and a Path-loss parameter may be replaced with one another.

In the present disclosure, the spatial relation may be replaced with spatial relation information, spatial relation assumption, spatial domain transmission filter, UE spatial domain transmission filter, spatial domain filter, UE transmission beam, UL transmission beam, DL-RS, QCL assumption, SRI, spatial relation based on SRI, or the like.

(Radio Communication Method)

<First Embodiment>

The UE may receive, with the DL signaling, first information indicating a Path-loss (PL) used for transmission power control (TPC) estimated and notified (transmitted) by a network. The DL signaling may be at least one of higher layer signaling (for example, RRC or MAC CE) and physical layer signaling (for example, downlink control information (DCI)).

The UE may calculate, using the received Path-loss ($PL_{b, f, c}(q_d)$), UL signal transmission power (for example, transmission power ($P_{PUSCH, b, f, c}(i, j, q_d, 1)$) of PUSCH of Expression (1), transmission power ($P_{PUCCH, b, f, c}(i, q_u, q_d, l)$) of PUCCH of Expression (3), and transmission power ($P_{SPS, b, f, c}(i, q_s, l)$) of SRS of Expression (5) for a reception point that does not transmit downlink data.

[Option 1] An absolute Path-loss (PL) value [dB] for each RS index may be notified (transmitted) from the network to the UE. The UE may directly use the notified absolute Path-loss value for calculation of transmission power.

[Option 2] A relative Path-loss (delta PL) value [dB] for each RS index may be notified (transmitted) from the network to the UE. The UE may use, for calculation of the transmission power, a Path-loss value obtained by applying (adding or subtracting) a received delta PL value to (or from) a conventional Path-loss value estimated from the DL RS transmitted from the macro cell (the central TRP).

PL value/delta PL value in the options 1 and 2 may be notified/set for each index of $q_d$/SSB/CSI-RS/SRS resource/SRS resource set. One or a plurality of RS indexes and PL values/delta PL values corresponding to the RS indexes may be notified by DL signaling. The PL values/delta PL values may read PL parameters/delta PL parameters.

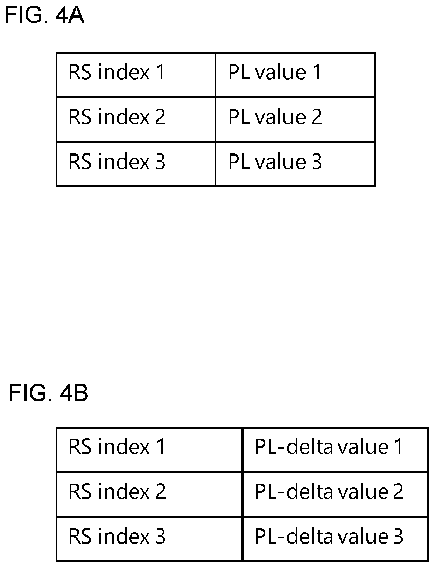

FIG. 4A is a diagram illustrating an example of association between RS indexes and PL values. FIG. 4B is a diagram illustrating an example of association between RS indexes and delta PL values. The association (a correspondence relation) between the RS indexes and the PL values/delta PL values is not limited to FIGS. 4A and 4B. For example, one RS index and a plurality of PL values/delta PL values may correspond. Note that a quantization table (a range and a step) of the PL values/delta PL values may be defined in advance in specifications. The PL values/delta PL values to be notified may be quantized values or indexes of the quantized values.

According to the first embodiment, even if the DL RS (an RS index) used for Path-loss estimation is not notified, the UE can calculate the transmission power by using the notified PL values/delta PL values.

<Operation procedure example>

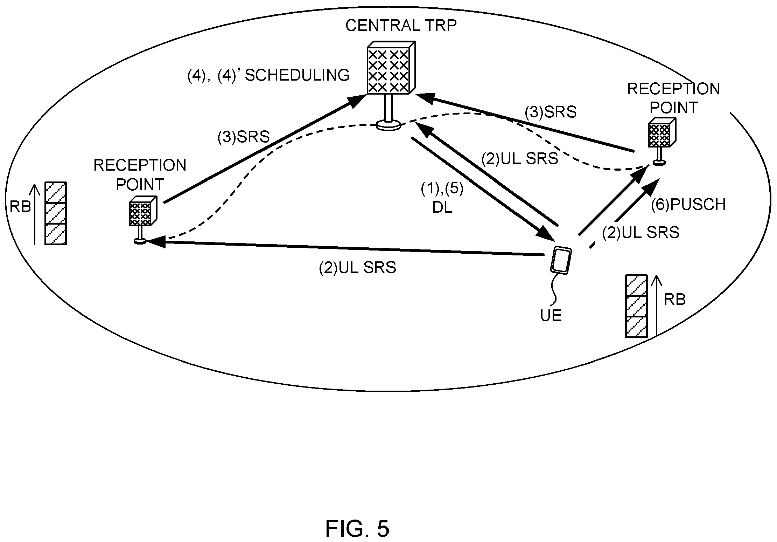

An operation after an initial access from the UE to the central TRP is explained. The central TRP may read a centralized unit (CU)/a distribution unit (DU). FIG. 5 is a diagram illustrating an example of an operation procedure after the initial access. Note that it is assumed that either one of the following (4) and (4) 'is executed.

(1) The UE receives various settings/instructions from the central TRP with DL signaling (higher layer/physical layer signaling).
(2) The UE transmits SRSs to the central TRP and the reception points. At this time, the UE uses conventional transmission power control for SRS transmission based on a DL RS from the central TRP. Alternatively, a new parameter for SRS transmission power control may be notified from the network and the UE may use the new transmission power calculation.
(3) The reception points transmit SRS reception signaling including information concerning the received SRSs (for example, measurement results) to the central TRP.
(4) The central TRP performs scheduling using the resource utilization method A illustrated in FIG. 2. At this time, the central TRP selects, based on the SRSs, a reception point that receives a UL. In addition, the central TRP estimates a DL Path-loss of the reception point based on the SRSs. The central TRP determines PUSCH scheduling considering multi-user interference.
(4)' The central TRP performs scheduling using the resource utilization method B illustrated in FIG. 3. The central TRP estimates a DL Path-loss based on SRSs jointly received by the plurality of reception points. The central TRP determines PUSCH scheduling.
(5) The central TRP transmits parameters for transmission power control for each SRS index and a DCI for PUSCH transmission to the UE with higher layer/physical layer signaling.
(6) The UE transmits PUSCH to the reception point. At this time, the UE performs PUSCH power estimation using the parameters for transmission power control associated with a SRS corresponding to the PUSCH.

A plurality of SRSs (beams) may be set for UL transmission. For the SRSs (beams), PL values/delta PL values may be estimated and notified to the UE. For scheduled PUSCH transmitted by the beams, parameters for transmission power control corresponding to the PUSCH may be used. In this case, the reception point of a specific UL beam may be considered to be semi-statically fixed. However, reception points that receive a plurality of different UL beams from the UE may be the same or may be different.

[Beam transmission]

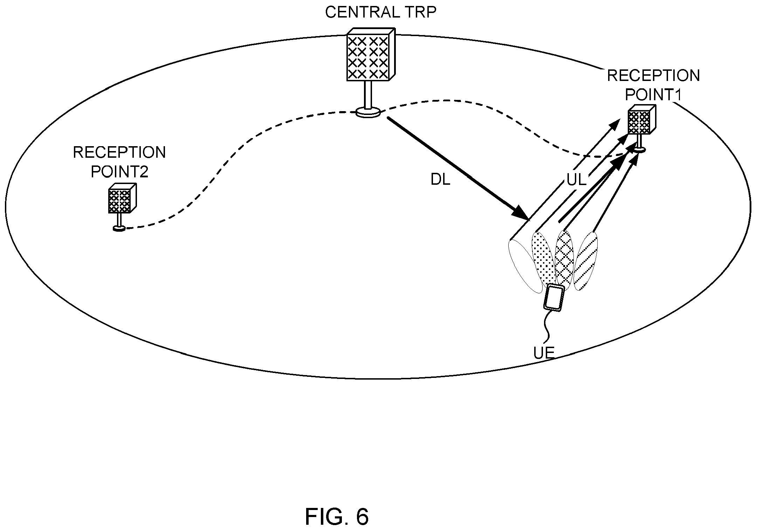

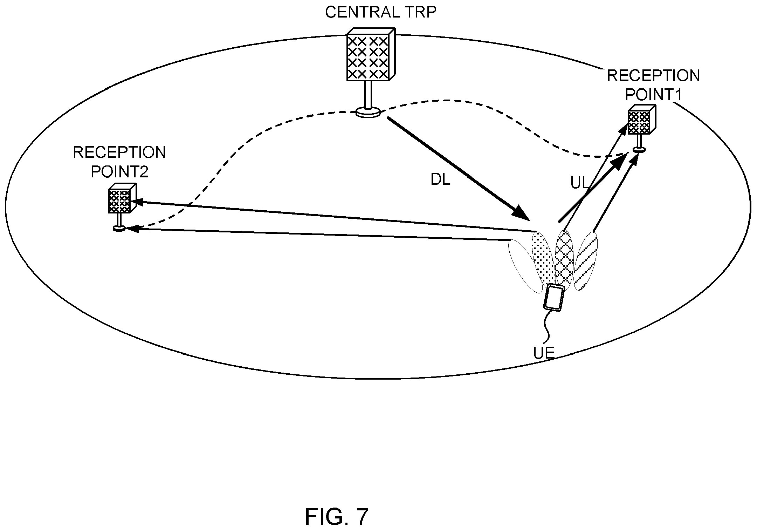

FIG. 6 is an example in which the UE transmits a plurality of beams to the same reception point. In the example illustrated in FIG. 6, the UE transmits all of four beams to one (same) reception point (reception point 1). FIG. 7 is an example in which a UE transmits a plurality of beams to different reception points. In the example illustrated in FIG. 7, the UE transmits two of four beams to the reception point 1 and transmits the remaining two to a reception point 2.

Which reception point receives a UL beam from the UE may not be recognized by the UE (may not be visible to the UE (transparent)/may not be notified/set to the UE). The network may select a reception point appropriate to the UL beam from the UE and estimate a PL value corresponding to the reception point and notify the PL value the UE.

[Transmission power control]

The relation (for example, FIG. 4A and FIG. 4B) between the RS index $q(q_d)$ of the Path-loss (for example, $PL_{b, f, c}(q_d)$ in Expressions (1), (3), and (5)) and the PL value/delta PL value may be indicated to the UE via physical layer/higher layer signaling. When an SRI designated for PUSCH transmission is associated with the RS index q, the UE may use a PL associated with the RS index q for PUSCH power calculation.

<Second Embodiment>

A UE may receive, from a network, second information (notification/instruction) indicating which Path-loss (Path-loss parameter, Path-loss estimation) among a plurality of Path-losses is used and calculate transmission power of a UL signal using the Path-loss indicated by the second information.

For example, the UE may receive, with additional DL signaling, information indicating whether a conventional Path-loss is used by the UE or a new Path-loss is used by the UE, may report UE capability information (UE capability) indicating a type of a Path-loss supported by the UE, or may receive DL additional signaling indicating a type of Path-loss determined by the network based on the reported UE capability information. The DL signaling may be at least one of higher layer signaling (for example, RRC or MAC CE) and physical layer signaling (for example, DCI). Processing in the second embodiment may be applied in combination with the processing in the first embodiment.

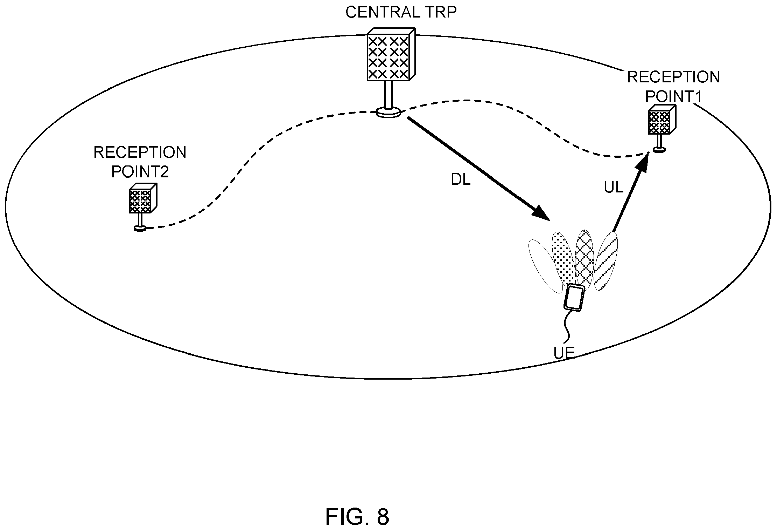

FIG. 8 is a diagram illustrating an example in which a UL signal is transmitted to a reception point. It is assumed that the UE receives, from the network, information indicating that a new Path-loss for SRS transmission is used. In the example illustrated in FIG. 8, the UE performs transmission power control (calculation of transmission power) using the new Path-loss for SRS transmission. Then, the UE transmits an SRS to the reception point with a specific beam. Note that the UL signal transmitted to the reception point is not limited to the SRS.

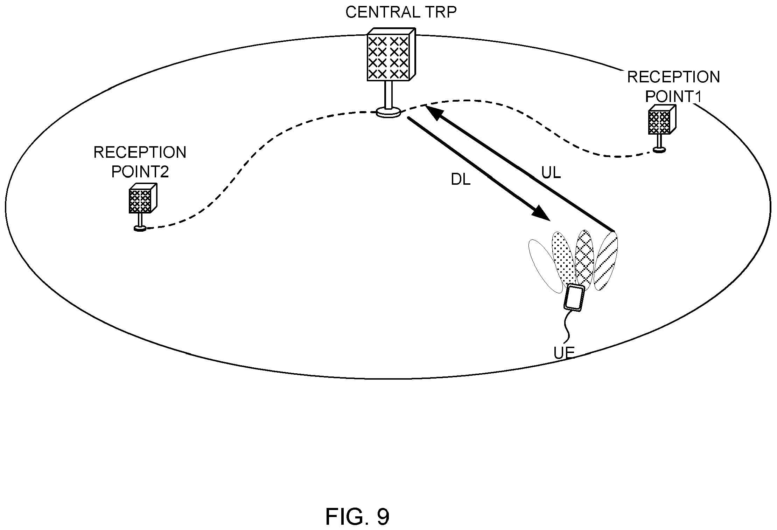

FIG. 9 is a diagram illustrating an example in which a UL signal is transmitted to a central TRP. It is assumed that the UE receives, from the network, information indicating that a conventional Path-loss for SRS transmission is used. In the example illustrated in FIG. 9, transmission power control (calculation of transmission power) of the SRS is performed using conventional Path-loss estimation. Then, the UE transmits an SRS to the central TRP with a specific beam. Note that the UL signal transmitted to the central TRP is not limited to the SRS.

For example, when the UE receives information (instruction) indicating that the conventional Path-loss is used after performing processing illustrated in FIG. 8, the UE may perform processing illustrated in FIG. 9.

According to the second embodiment, semi-static or dynamic UL scheduling to the central TRP (macro cell) or the reception point can be supported.

<Third Embodiment>

As explained in the first embodiment, a UE may receive, with DL signaling, a Path-loss (Path-loss parameter) estimated and notified (transmitted) by a network. At this time, the UE may receive, from the network, third information (at least one of RRC signaling and MAC CE) indicating a relation (association) between one RS index and one or a plurality of Path-losses (PL values/delta PL values (parameters)) (step 1).

Then, the UE may receive, from the network, fourth information (at least one of the MAC CE and DCI) indicating mapping of one RS index and one PL value/delta PL value (parameter) in the association of the third information (step 2).

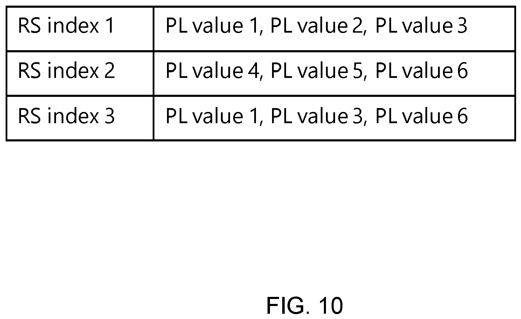

FIG. 10 is a diagram illustrating an example of association between an RS index and a plurality of PL values/delta PL values notified by step 1. It is assumed that the UE receives information illustrated in FIG. 10 from the network with the DL signaling. A beam 1 (a spatial relation) used for transmission of an SRS1 is an RS index 1. That is, the RS index 1 corresponds to the beam 1 and the SRS1. Similarly, RS indices 2, 3 correspond to beams 2, 3 and SRS 2, 3. For example, in FIG. 10, PL values 1, 2, and 3 are associated with the RS index 1.

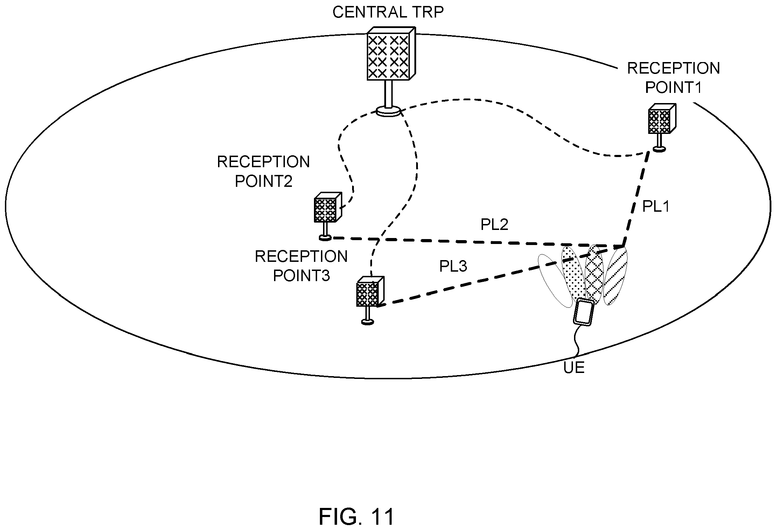

FIG. 11 is a diagram illustrating a correspondence relation between PL values and reception points. As illustrated in FIG. 11, it is assumed that a PL value 1 illustrated in FIG. 10 corresponds to a reception point 1, a PL value 2 corresponds to a reception point 2, and a PL value 3 corresponds to a reception point 3.

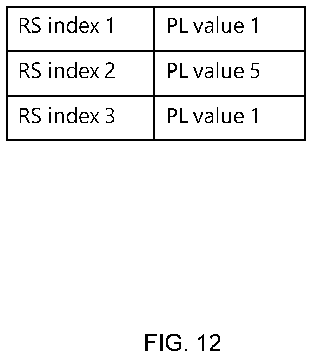

FIG. 12 is a diagram illustrating a first example of association between an RS index and one PL value/delta PL value notified by step 2. It is assumed that the UE receives information illustrated in FIG. 12 from the network with DL signaling after receiving information illustrated in FIG. 10. The DL signaling may be MAC CE that activates an SRS resource or may be DCI that triggers the SRS. the association (mapping) between the RS index and the one PL value/delta PL value illustrated in FIG. 12 is notified to the UE, whereby the UE narrows down a plurality of candidates (PL values/delta PL values illustrated in FIG. 10) to one PL value/delta PL value.

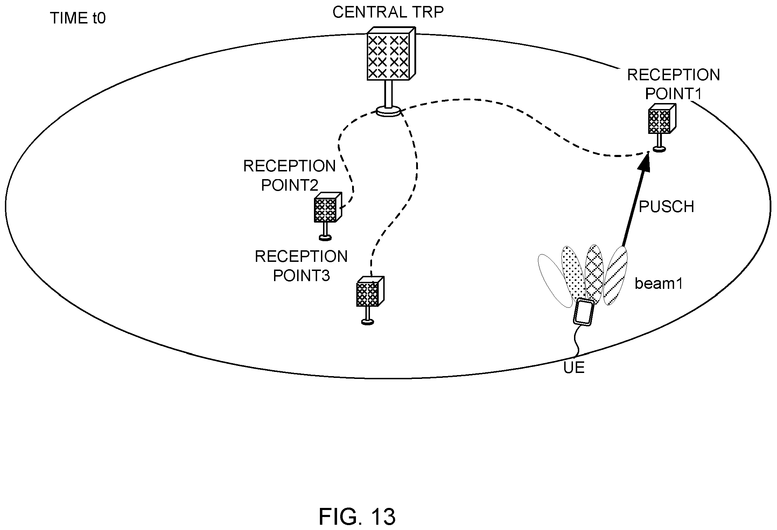

FIG. 13 is a transmission example of a UL signal corresponding to FIG. 12. As in FIGS. 10 and 11, it is assumed that PL value 1 corresponds to the reception point 1, the PL value 2 corresponds to the reception point 2, and the PL value 3 corresponds to the reception point 3. As illustrated in FIG. 12, since the RS index 1 (the beam 1) corresponds to the PL value 1, the UE calculates transmission power using the PL value 1 and transmits, using the transmission power, a UL signal (For example, PUSCH) to the reception point 1 with the beam 1. The UL signal may be an SRS or the like.

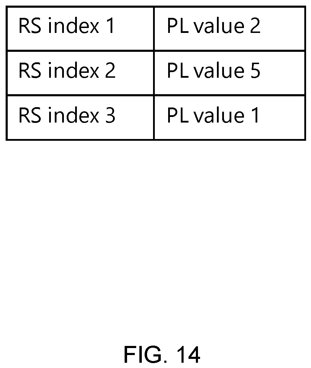

FIG. 14 is a diagram illustrating a second example of association between PL/delta PL parameters and RS indexes. It is assumed that the UE receives information illustrated in FIG. 14 from the network with DL signaling after performing the transmission illustrated in FIG. 13. The DL signaling may be MAC CE that activates an SRS resource or may be DCI that triggers the SRS.

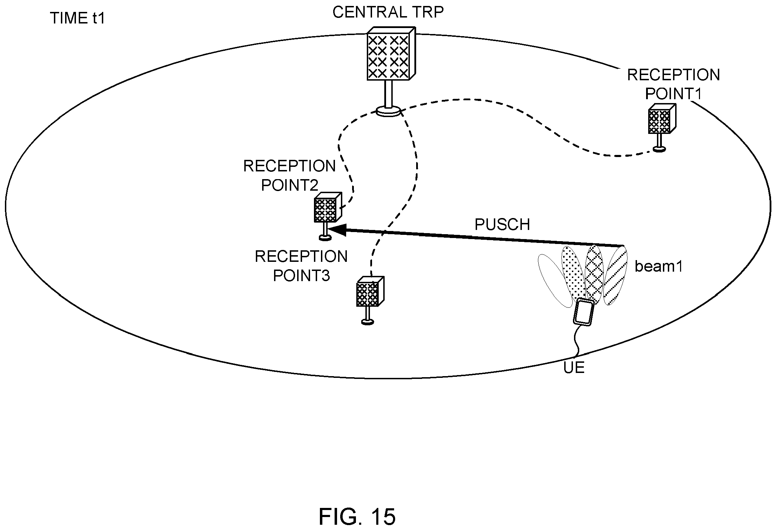

FIG. 15 is a transmission example of a UL signal corresponding to FIG. 14. As in FIGS. 10 and 11, it is assumed that PL value 1 corresponds to the reception point 1, the PL value 2 corresponds to the reception point 2, and the PL value 3 corresponds to the reception point 3. As illustrated in FIG. 14, the RS index 1 (the beam 1) corresponds to the PL value 2. The UE calculates transmission power using the PL value 2 and transmits, using the transmission power, a UL signal (for example, PUSCH) to the reception point 2 with the beam 1. The UL signal may be an SRS or the like.

Consequently, a Path-loss can be changed semi-statically or dynamically. Therefore, semi-static or dynamic UL scheduling can be supported among a plurality of reception points.

<Fourth Embodiment>

In a fourth embodiment, an example in which the processing in the second embodiment and the processing in the third embodiment are combined is explained.

[Option 1]

When (or after) performing the processing in the third embodiment, a UE may receive additional DL signaling indicating whether a conventional Path-loss (Path-loss value/Path-loss parameter) is used by the UE or a new (newly notified) Path-loss (Path-loss parameter) is used by the UE, may report UE capability information indicating a type of a Path-loss supported by the UE, or may receive additional DL signaling indicating a type of a Path-loss determined by a network based on the reported UE capability information.

[Option 2]

As in step 2 in the third embodiment, the UE may receive, from a network, fourth information (at least one of MAC CE and DCI) indicating mapping of one RS index and one PL value/delta PL value (parameter. In the fourth information, the RS index and the PL value/delta PL value or "no PL value" may be mapped. "No PL value" means that the UE applies conventional Path-loss (PL) estimation. The UE may transmit a UL signal to a central TRP when the conventional Path-loss estimation is applied.

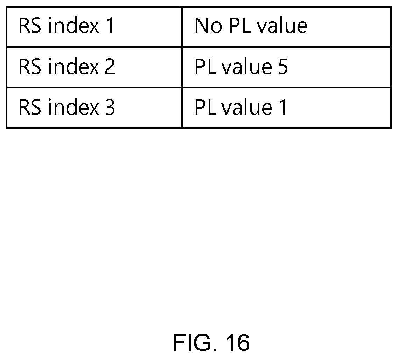

FIG. 16 is a diagram illustrating a third example of association between PL/delta PL parameters and RS indexes. It is assumed that the UE receives information illustrated in FIG. 16 from the network with the DL signaling.

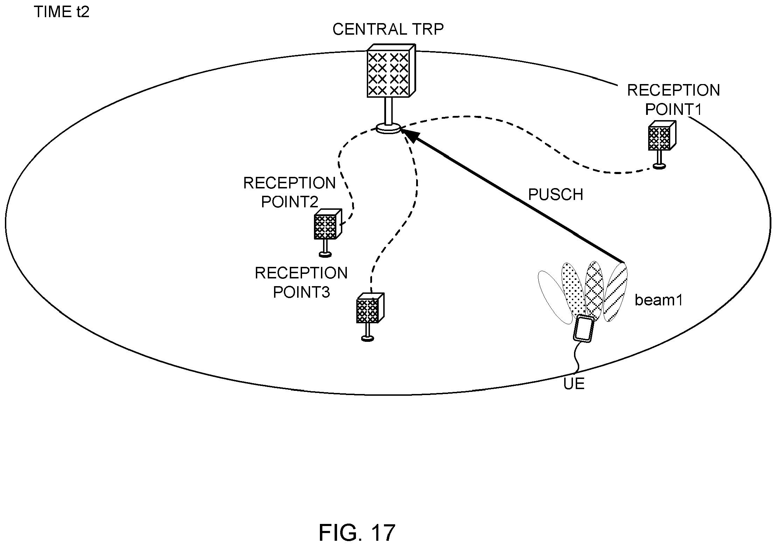

FIG. 17 is a transmission example of a UL signal corresponding to FIG. 16. As illustrated in FIG. 16, since the RS index 1 corresponds to "No PL value ", the UE calculates transmission power by applying the conventional Path-loss (PL) estimation and transmits, using the transmission power, a UL signal (for example, PUSCH) to the central TRP with the beam 1.

According to the fourth embodiment, the UE can flexibly change a transmission destination of the UL signal.

<Others>

"RS index" in the present disclosure may read list/set/group/spatial-relation/QCL/TCI state of the RS index. Note that the Path-loss may be different depending on a UL spatial domain filter.

Processing related to PUSCH in the present disclosure may be applied to PUCCH/SRS as well. For example, the processing may be applied to a limited method of use of SRS resources (an SRS resource set). For example, in a using method (usage) of the SRS resource set, beam management (BM) is usually a conventional TPC (used for beam sweeping), and if set, new Path-loss estimation (processing of the present disclosure) may be applied as another using method.

The present disclosure may be applied only when UE capability corresponding to the present disclosure is reported. The corresponding UE capability may be, for example, at least one of the following (1) to (5).

(1) Whether to support extension (Path-loss estimation) of transmission power control of the present disclosure.
(2) The number of supported RS indexes (the number of reception points).
(3) A maximum number of PL values/delta PL values set in the UE.
(4) A maximum number of PL values/delta PL values set for each RS index of the UE.
(5) Whether extension of transmission power control of the present disclosure is applied to PUSCH/PUCCH/SRS/PRACH (capability for each UL channel: if it is further applicable to an SRS for each using method).

(Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

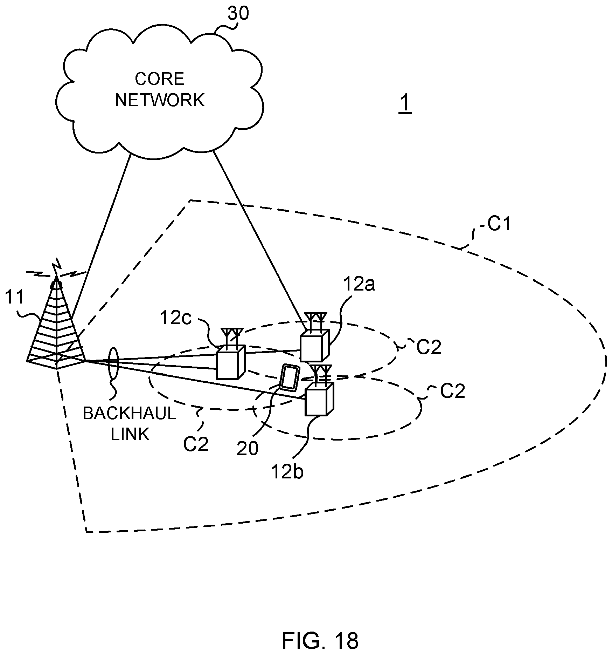

FIG. 18 is a diagram illustrating an example of a schematic configuration of a radio communication system according to an embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In EN-DC, an LTE (E-UTRA) base station (eNB) is a master node (MN), and an NR base station (gNB) is a secondary node (SN). In NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNBs) (NR-NR dual connectivity (NN-DC)).

The radio communication system 1 may include a base station 11 that forms a macro cell C1 with a relatively wide coverage, and base stations 12 (12a to 12c) that are arranged in the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as base stations 10 unless specified otherwise.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency range 1 (FR1) and a second frequency range 2 (FR2). The macro cell C1 may be included in the FR1, and the small cell C2 may be included in the FR2. For example, the FR1 may be a frequency band of 6 GHz or less (sub-6 GHz), and the FR2 may be a frequency band higher than 24 GHz (above-24 GHz). Note that the frequency ranges, definitions, and the like of FR1 and FR2 are not limited to these, and for example, FR1 may be a frequency range higher than FR2.

Further, the user terminal 20 may perform communication on each CC using at least one of time division duplex (TDD) or frequency division duplex (FDD).

The plurality of base stations 10 may be connected by wire (for example, an optical fiber or an X2 interface in compliance with common public radio interface (CPRI)) or by radio (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

A base station 10 may be connected to a core network 30 via another base station 10 or directly. The core network 30 may include, for example, at least one of evolved packet core (EPC), 5G core network (5GCN), next generation core (NGC), and the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that, in the radio communication system 1, another radio access method (for example, another single carrier transmission method and another multi-carrier transmission method) may be used as UL and DL radio access methods.

In the radio communication system 1, as a downlink channel, a downlink shared channel (a physical downlink shared channel (PDSCH)) shared by each user terminal 20, a broadcast channel (a physical broadcast channel (PBCH)), a downlink control channel (a physical downlink control channel (PDCCH)), or the like may be used.

In the radio communication system 1, an uplink shared channel (physical uplink shared channel (PUSCH)) shared by each user terminal 20, an uplink control channel (physical uplink control channel (PUCCH)), a random access channel (physical random access channel (PRACH)), and the like may be used as uplink channels.

User data, higher layer control information, and a system information block (SIB) and the like are transmitted by the PDSCH. User data, higher layer control information, and the like may be transmitted on the PUSCH. Further, the PBCH may transmit a master information block (MIB).

Lower layer control information may be transmitted by PDCCH. The lower layer control information may include, for example, downlink control information (DCI) including scheduling information of at least one of the PDSCH and the PUSCH.

Note that, the DCI for scheduling the PDSCH may be referred to as DL assignment, DL DCI, and the like, and the DCI for scheduling the PUSCH may be referred to as UL grant, UL DCI, and the like. Note that PDSCH may be replaced with DL data, and PUSCH may be replaced with UL data.

A control resource set (CORESET) and a search space may be used to detect the PDCCH. The CORESET corresponds to a resource that searches for DCI. The search space corresponds to a search area and a search method for PDCCH candidates. One CORESET may be associated with one or more search spaces. The UE may monitor CORESET associated with a given search space based on search space configuration.

One search space may correspond to a PDCCH candidate corresponding to one or a plurality of aggregation levels. One or more search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery confirmation information (which may be referred to as, for example, hybrid automatic repeat request acknowledgement (HARQ-ACK), ACK/NACK, or the like), scheduling request (SR), or the like may be transmitted on the PUCCH. A random access preamble for establishing a connection with a cell may be transmitted on PRACH.

Note that in the present disclosure, downlink, uplink, and the like may be expressed without "link". Furthermore, various channels may be expressed without "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as the DL-RS.

The synchronization signal may be at least one of, for example, a primary synchronization signal (PSS) and a secondary synchronization signal (SSS). A signal block including the SS (PSS or SSS) and the PBCH (and the DMRS for the PBCH) may be referred to as an SS/PBCH block, an SS block (SSB), or the like. Note that the SS, the SSB, or the like may also be referred to as a reference signal.

In the radio communication system 1, a sounding reference signal (SRS), a demodulation reference signal (DMRS), and the like may be transmitted as an uplink reference signal (UL-RS). Note that, DMRSs may be referred to as "user terminal-specific reference signals (UE-specific Reference Signals)."

(Base Station)

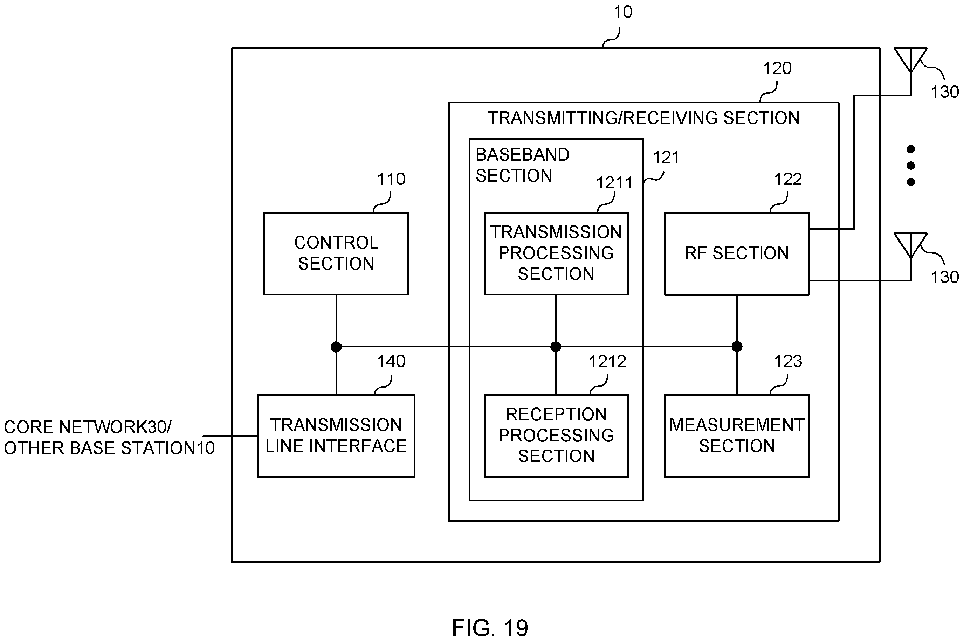

FIG. 19 is a diagram illustrating an example of a configuration of a base station according to an embodiment. The base station 10 includes a control section 110, a transmitting/receiving section 120, a transmission/reception antenna 130, and a transmission line interface 140. Note that one or more of the control sections 110, one or more of the transmitting/receiving sections 120, one or more of the transmission/reception antennas 130, and one or more of the transmission line interfaces 140 may be provided.

Note that, although this example will primarily illustrate functional blocks that pertain to characteristic parts of the present embodiment, it may be assumed that the base station 10 has other functional blocks that are necessary for radio communication as well. A part of processing of each section described below may be omitted.

The control section 110 controls the entire base station 10. The control section 110 can include a controller, a control circuit, or the like, which is described based on common recognition in the technical field to which the present disclosure relates.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or release) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be implemented by a transmitter/receiver, an RF circuit, a baseband circuit, a filter, a phase shifter, a measurement circuit, a transmission/reception circuit, and the like, which are described based on common recognition in the technical field related to the present disclosure.

The transmitting/receiving section 120 may be configured as an integrated transmitting/receiving section, or may include a transmitting section and a receiving section. The transmitting section may include the transmission processing section 1211 and the RF section 122. The receiving section may include the reception processing section 1212, the RF section 122, and the measurement section 123.

The transmission/reception antenna 130 can be implemented by an antenna described based on common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, for example, on data or control information acquired from the control section 110 to generate a bit string to be transmitted.

The transmitting/receiving section 120 (transmission processing section 1211) may perform transmission processing such as channel encoding (which may include error correcting encoding), modulation, mapping, filtering processing, discrete Fourier transform (DFT) processing (if necessary), inverse fast Fourier transform (IFFT) processing, precoding, or digital-analog transform on the bit string to be transmitted, and may output a base band signal.

The transmitting/receiving section 120 (RF section 122) may perform modulation to a radio frequency range, filtering processing, amplification, and the like on the base band signal, to transmit a signal in the radio frequency range via the transmission/reception antenna 130.

Meanwhile, the transmitting/receiving section 120 (RF section 122) may perform amplification, filtering processing, demodulation to a base band signal, and the like on the signal in the radio frequency band received by the transmission/reception antenna 130.

The transmitting/receiving section 120 (reception processing section 1212) may apply reception processing such as analog-digital transform, fast Fourier transform (FFT) processing, inverse discrete Fourier transform (IDFT) processing (if necessary), filtering processing, demapping, demodulation, decoding (which may include error correcting decoding), MAC layer processing, RLC layer processing, and PDCP layer processing on the acquired base band signal to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, other base stations 10, and the like, and may acquire, transmit, and the like user data (user plane data), control plane data, and the like for the user terminal 20.

Note that the transmitting section and the receiving section of the base station 10 in the present disclosure may include at least one of the transmitting/receiving section 120, the transmission/reception antenna 130, and the transmission line interface 140.

The transmitting/receiving section 120 may transmit first information indicating a Path-loss used for transmission power control and receive an uplink (UL) signal transmitted with transmission power calculated based on the Path-loss.

The transmitting/receiving section 120 may transmit second information indicating which Path-loss among a plurality of Path-losses is used and receive a UL signal transmitted with transmission power calculated using the Path-loss indicated by the second information.

The transmitting/receiving section 120 may transmit third information indicating association between an index of a reference signal and a plurality of Path-losses and transmit fourth information indicating mapping of the index and one of the plurality of Path-losses in the association of the third information. Then, the transmitting/receiving section 120 may receive a UL signal transmitted with transmission power calculated based on a Path-loss determined based on the fourth information.

(User Terminal)

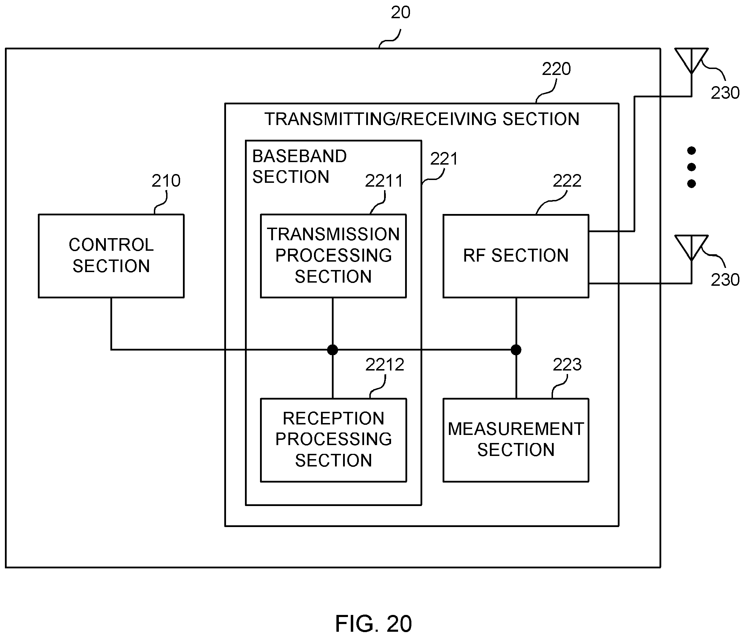

FIG. 20 is a diagram illustrating an example of a configuration of a user terminal according to an embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described based on common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may be configured by the reception processing section 2212, the RF section 222, and the measurement section 223.

The transmission/reception antenna 230 can include an antenna that is described based on common recognition in the technical field related to the present disclosure, for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. In a case where transform precoding is enabled for a given channel (for example, PUSCH), the transmitting/receiving section 220 (transmission processing section 2211) may perform DFT processing as the transmission processing in order to transmit the channel using a DFT-s-OFDM waveform. In a case where it is not the case, DFT processing need not be performed as the transmission processing.

The transmitting/receiving section 220 (RF section 222) may perform modulation to a radio frequency range, filtering processing, amplification, and the like on the baseband signal, to transmit a signal in the radio frequency range via the transmission/reception antenna 230.

Meanwhile, the transmitting/receiving section 220 (RF section 222) may perform amplification, filtering processing, demodulation to a baseband signal, and the like on the signal in the radio frequency range received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220 or the transmission/reception antenna 230.

The transmitting/receiving section 220 may receive first information indicating a Path-loss used for transmission power control. Further, the transmitting/receiving section 220 may receive second information indicating which Path-loss is used among a plurality of Path-losses. In addition, the transmitting/receiving section 220 may receive third information indicating association between an index of a reference signal and a plurality of Path-losses and receive fourth information indicating mapping of one index and one Path-loss in the association of the third information.

The control section 210 may calculate, based on the Path-loss, transmission power of an uplink (UL) signal to a reception point that does not transmit downlink data. The control section 210 may calculate the transmission power of the UL signal using the Path-loss indicated by the second information. The control section 210 may determine, based on the fourth information, a Path-loss to be used and calculate transmission power of the UL signal based on the determined Path-loss.

(Hardware Configuration)

Note that the block diagrams that have been used to describe the above embodiments illustrate blocks in functional units. These functional blocks (components) may be implemented in arbitrary combinations of at least one of hardware and software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional block may be achieved by combining the one device or the plurality of devices with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, assigning, and so on. For example, a functional block (component) that has a transmission function may be referred to as a transmitting section, a transmitter, and the like. In any case, as described above, the implementation method is not particularly limited.

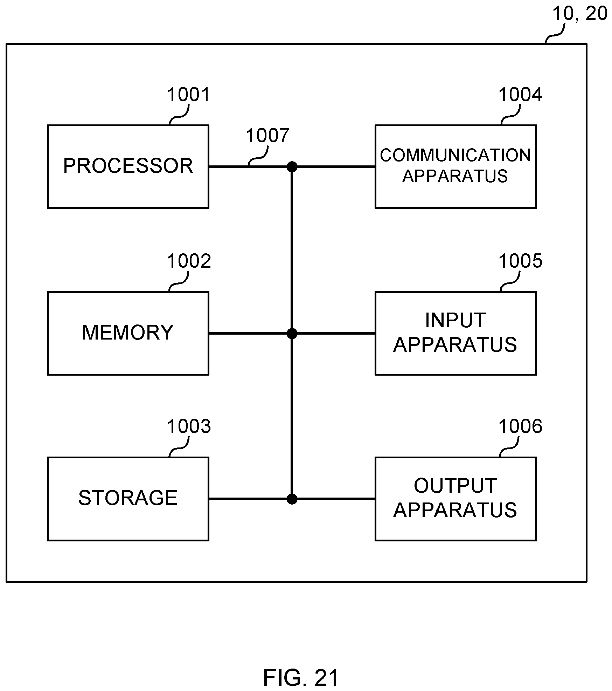

For example, the base station, the user terminal, or the like according to one embodiment of the present disclosure may function as a computer that executes the processing of the radio communication method in the present disclosure. FIG. 21 is a diagram illustrating an example of a hardware configuration of the base station and the user terminal according to an embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, and the like.

In the present disclosure, the terms such as an apparatus, a circuit, a device, a unit (section), or a unit can be replaced with each other. The hardware configuration of the base station 10 and the user terminal 20 may include one or more of each of the apparatuses illustrated in the drawings, or does not have to include some apparatuses.

For example, although only one processor 1001 is shown, a plurality of processors may be provided. Further, the processing may be executed by one processor, or the processing may be executed by two or more processors simultaneously or sequentially, or using other methods. Note that the processor 1001 may be implemented with one or more chips.

Each function of the base station 10 and the user terminal 20 is implemented by, for example, reading given software (program) into hardware such as the processor 1001 and the memory 1002, and by controlling the operation in the processor 1001, the communication in the communication apparatus 1004, and at least one of the reading and writing of data in the memory 1002 and the storage 1003.

The processor 1001 may control the whole computer by, for example, running an operating system. The processor 1001 may be configured by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Furthermore, the processor 1001 reads programs (program codes), software modules, data, and so on from at least one of the storage 1003 and the communication apparatus 1004 into the memory 1002, and executes various processing according to these. As the program, a program that causes a computer to execute at least a part of the operation described in the above-described embodiment is used. For example, the control section 110 (210) may be implemented by a control program that is stored in the memory 1002 and that operates on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), and other appropriate storage media. The memory 1002 may be referred to as a register, a cache, a main memory (primary storage apparatus), and the like. The memory 1002 can store a program (program code), a software module, and the like, which are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, or a key drive), a magnetic stripe, a database, a server, and other appropriate storage media. The storage 1003 may be referred to as "secondary storage apparatus".

The communication apparatus 1004 is hardware (transmitting/receiving device) for performing inter-computer communication via at least one of a wired network and a radio network, and for example, is referred to as "network device", "network controller", "network card", "communication module", and the like. The communication apparatus 1004 may include a high frequency switch, a duplexer, a filter, a frequency synthesizer, and the like in order to implement, for example, at least one of frequency division duplex (FDD) and time division duplex (TDD). For example, the transmitting/receiving section 120 (220), the transmission/reception antenna 130 (230), and the like described above may be implemented by the communication apparatus 1004. The transmitting/receiving section 120 (220) may be implemented in a physically or logically separated manner by the transmitting section 120a (220a) and the receiving section 120b (220b).

The input apparatus 1005 is an input device for receiving input from the outside (for example, a keyboard, a mouse, a microphone, a switch, a button, a sensor, and so on). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

Furthermore, these pieces of apparatus, including the processor 1001, the memory 1002, and so on are connected by the bus 1007 so as to communicate information. The bus 1007 may be formed with a single bus, or may be formed with buses that vary between pieces of apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of these pieces of hardware.

(Variations)

Note that terms described in the present disclosure and terms necessary for understanding the present disclosure may be replaced with terms that have the same or similar meanings. For example, a channel, a symbol, and a signal (signal or signaling) may be replaced interchangeably. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may be formed with one or more durations (frames) in the time domain. Each of the one or more periods (frames) included in the radio frame may be referred to as a subframe. Further, the subframe may include one or more slots in the time domain. A subframe may be a fixed time duration (for example, 1 ms) that is not dependent on numerology.

Here, the numerology may be a communication parameter used for at least one of transmission and reception of a given signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by a transceiver in the time domain, and the like.

The slot may include one or more symbols in the time domain (orthogonal frequency division multiplexing (OFDM) symbols, single carrier frequency division multiple access (SC-FDMA) symbols, and the like). Also, a slot may be a time unit based on numerology.

A slot may include a plurality of mini slots. Each mini slot may include one or more symbols in the time domain. Further, the mini slot may be referred to as a sub slot. Each mini slot may include fewer symbols than the slot. A PDSCH (or PUSCH) transmitted in a time unit larger than the mini slot may be referred to as PDSCH (PUSCH) mapping type A. A PDSCH (or PUSCH) transmitted using a mini slot may be referred to as "PDSCH (PUSCH) mapping type B".

A radio frame, a subframe, a slot, a mini slot and a symbol all represent the time unit in signal communication. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as a TTI, a plurality of consecutive subframes may be referred to as a TTI, or one slot or one mini slot may be referred to as a TTI. That is, at least one of the subframe and the TTI may be a subframe (1 ms) in the existing LTE, may be a period shorter than 1 ms (for example, one to thirteen symbols), or may be a period longer than 1 ms. Note that the unit to represent the TTI may be referred to as a "slot", a "mini slot", and so on, instead of a "subframe".

Here, a TTI refers to the minimum time unit of scheduling in radio communication, for example. For example, in the LTE system, a base station performs scheduling to allocate radio resources (frequency bandwidth, transmission power, and the like that can be used in each user terminal) to each user terminal in TTI units. Note that the definition of TTIs is not limited to this.

The TTI may be the transmission time unit of channel-encoded data packets (transport blocks), code blocks, codewords, and so on, or may be the unit of processing in scheduling, link adaptation, and so on. Note that when TTI is given, a time interval (for example, the number of symbols) in which the transport blocks, the code blocks, the codewords, and the like are actually mapped may be shorter than TTI.

Note that, when one slot or one mini slot is referred to as a "TTI", one or more TTIs (that is, one or more slots or one or more mini slots) may be the minimum time unit of scheduling. Also, the number of slots (the number of mini slots) to constitute this minimum time unit of scheduling may be controlled.

A TTI having a time duration of 1 ms may also be referred to as a usual TTI (TTI in 3GPP Rel. 8 to 12), a normal TTI, a long TTI, a usual subframe, a normal subframe, a long subframe, a slot, or the like. A TTI shorter than the usual TTI may be referred to as a shortened TTI, a short TTI, a partial TTI (or fractional TTI), a shortened subframe, a short subframe, a mini slot, a subslot, a slot, or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in the RB may be determined based on numerology.

Also, an RB may include one or more symbols in the time domain, and may be one slot, one mini slot, one subframe or one TTI in length. One TTI, one subframe, and the like each may be formed with one or more resource blocks.

Note that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a given numerology in a given carrier. Here, the common RB may be specified by the index of the RB based on a common reference point of the carrier. The PRB may be defined in a BWP and numbered within that BWP.

The BWP may include a BWP for UL (UL BWP) and a BWP for DL (DL BWP). For the UE, one or more BWPs may be configured within one carrier.

At least one of the configured BWPs may be active, and the UE does not need to assume to transmit or receive a given signal/channel outside the active BWP. Note that "cell", "carrier", and the like in the present disclosure may be replaced with "BWP".

Note that the structures of radio frames, subframes, slots, mini slots, symbols, and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

Furthermore, the information and parameters described in the present disclosure may be represented in absolute values, represented in relative values with respect to given values, or represented using other corresponding information. For example, a radio resource may be instructed by a given index.

The names used for parameters and so on in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals, and the like can be output at least either from higher layers to lower layers, or from lower layers to higher layers. Information, signals and so on may be input and output via a plurality of network nodes.

The information, signals and so on that are input and/or output may be stored in a specific location (for example, in a memory), or may be managed in a control table. The information, signals, and the like to be input and output can be overwritten, updated, or appended. The output information, signals, and the like may be deleted. The information, signals and so on that are input may be transmitted to other pieces of apparatus.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, an MAC control element (CE).

Also, reporting of given information (for example, reporting of information to the effect that "X holds") does not necessarily have to be sent explicitly, and can be sent implicitly (for example, by not reporting this piece of information, or by reporting another piece of information, and so on).

Decisions may be made in values represented by one bit (0 or 1), may be made in Boolean values that represent true or false, or may be made by comparing numerical values (for example, comparison against a given value).

Software, whether referred to as "software", "firmware", "middleware", "microcode" or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or another remote source by using at least one of a wired technology (coaxial cable, optical fiber cable, twisted pair, digital subscriber line (DSL), or the like) and a radio technology (infrared rays, microwaves, and the like), at least one of the wired technology and the radio technology is included within the definition of a transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station and the base station subsystem that performs a communication service in this coverage.

In the present disclosure, the terms such as "mobile station (MS)", "user terminal", "user equipment (UE)", and "terminal" can be used interchangeably.

A mobile station may be referred to as a subscriber station, mobile unit, subscriber unit, radio unit, remote unit, mobile device, radio device, radio communication device, remote device, mobile subscriber station, access terminal, mobile terminal, radio terminal, remote terminal, handset, user agent, mobile client, client, or some other suitable terms.

At least one of the base station and the mobile station may be referred to as a transmitting apparatus, a receiving apparatus, a radio communication apparatus, and the like. Note that at least one of the base station and the mobile station may be a device mounted on a moving object, a moving object itself, and the like. The moving object may be a transportation (for example, a car, an airplane, or the like), an unmanned moving object (for example, a drone, an autonomous car, or the like), or a (manned or unmanned) robot. Note that at least one of the base station and the mobile station also includes an apparatus that does not necessarily move during a communication operation. For example, at least one of the base station and the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, an uplink channel and a downlink channel may be replaced with a side channel.

Likewise, the user terminal in the present disclosure may be replaced with a base station. In this case, the base station 10 may be configured to have the functions of the user terminal 20 described above.

In the present disclosure, an operation performed by a base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, and are not limited to the presented particular order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (x is, for example, an integer or decimal), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-Wide Band (UWB), Bluetooth (registered trademark), or another appropriate radio communication method, a next generation system expanded based on these, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

Reference to elements with designations such as "first", "second", and so on as used in the present disclosure does not generally limit the number/quantity or order of these elements. These designations can be used in the present disclosure, as a convenient way of distinguishing between two or more elements. In this way, reference to the first and second elements does not imply that only two elements may be employed, or that the first element must precede the second element in some way.

The terms "judging (determining)" as used in the present disclosure may encompass a wide variety of actions. For example, "judging (determining)" may be interpreted to mean making judgements and determinations related to judging, calculating, computing, processing, deriving, investigating, looking up, search, inquiry (for example, looking up in a table, database, or another data structure), ascertaining, and so on.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory), and so on.

In addition, to "judge" and "determine" may be interpreted to mean making judgements and determinations related to resolving, selecting, choosing, establishing, comparing, and so on. In other words, to "judge" and "determine" may be interpreted to mean making judgements and determinations related to some action.

In addition, to "judge (determine)" may be replaced with "assuming", "expecting", "considering", and so on.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as a number of non-limiting and non-inclusive examples, by using electromagnetic energy having wavelengths in the radio frequency domain, microwave, and optical (both visible and invisible) regions, or the like.

In the present disclosure, the phrase "A and B are different" may mean "A and B are different from each other". Note that the phrase may mean that "A and B are different from C". The terms such as "leave" "coupled" and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

Now, although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined based on the description of claims. Consequently, the description of the present disclosure is provided only for the purpose of explaining examples, and should by no means be construed to limit the invention according to the present disclosure in any way.

## Claims

1. A terminal comprising:

   a receiving section configured to receive first information indicating a Path-loss used for transmission power control; and
   a control section that calculates, based on the Path-loss, transmission power of an uplink (UL) signal to a reception point that does not transmit downlink data.

2. The terminal according to claim 1, wherein

   the receiving section receives second information indicating which Path-loss among a plurality of Path-losses is used, and
   the control section calculates the transmission power of the UL signal using the Path-loss indicated by the second information.

3. The terminal according to claim 1 or 2, wherein

   the receiving section receives third information indicating association between an index of a reference signal and a plurality of Path-losses and receives fourth information indicating mapping of the index and one of the plurality of Path-losses in the association of the third information, and
   the control section determines, based on the fourth information, a Path-loss to be used and calculates transmission power of the UL signal based on the determined Path-loss.

4. A radio communication method of a terminal, comprising:

   a step of receiving first information indicating a Path-loss used for transmission power control; and
   a step of calculating, based on the Path-loss, transmission power of an uplink (UL) signal to a reception point that does not transmit downlink data.

5. A base station comprising:

   a transmitting section configured to transmit first information indicating a Path-loss used for transmission power control; and
   a receiving section configured to receive an uplink (UL) signal transmitted with transmission power calculated based on the Path-loss.

FIG. 1A

GENERAL ARRANGEMENT

TRP

UL

UL    DL

DL    UL

UE              UE

FIG. 1B

UL HIGH DENSITY ARRANGEMENT

CENTRAL TRP

RECEPTION POINT          RECEPTION POINT

UL    DL          DL    UL

UE              UE

EP 4 117 349 A1

FIG. 2

FIG. 3

EP 4 117 349 A1

FIG. 4A

| RS index 1 | PL value 1 |
|---|---|
| RS index 2 | PL value 2 |
| RS index 3 | PL value 3 |

FIG. 4B

| RS index 1 | PL-delta value 1 |
|---|---|
| RS index 2 | PL-delta value 2 |
| RS index 3 | PL-delta value 3 |

CENTRAL TRP

(4), (4)' SCHEDULING

RECEPTION POINT

(3)SRS

(3)SRS

RECEPTION POINT

(2)UL SRS

(1),(5) DL

(6)PUSCH

(2)UL SRS

RB

(2)UL SRS

UE

RB

FIG. 5

FIG. 6

EP 4 117 349 A1

FIG. 7

CENTRAL TRP

RECEPTION
POINT1

RECEPTION
POINT2

DL

UL

UE

FIG. 8

EP 4 117 349 A1

FIG. 9

| RS index 1 | PL value 1, PL value 2, PL value 3 |
|---|---|
| RS index 2 | PL value 4, PL value 5, PL value 6 |
| RS index 3 | PL value 1, PL value 3, PL value 6 |

FIG. 10

RECEPTION POINT1

RECEPTION POINT2

RECEPTION POINT3

CENTRAL TRP

UE

PL1

PL2

PL3

FIG. 11

| RS index 1 | PL value 1 |
|------------|------------|
| RS index 2 | PL value 5 |
| RS index 3 | PL value 1 |

FIG. 12

FIG. 13

| RS index 1 | PL value 2 |
|------------|------------|
| RS index 2 | PL value 5 |
| RS index 3 | PL value 1 |

FIG. 14

FIG. 15

| RS index 1 | No PL value |
|------------|-------------|
| RS index 2 | PL value 5  |
| RS index 3 | PL value 1  |

FIG. 16

FIG. 17

FIG. 18

FIG. 19

EP 4 117 349 A1

FIG. 20

10, 20

1001

PROCESSOR

1007

COMMUNICATION
APPARATUS

1004

1002

MEMORY

INPUT
APPARATUS

1005

1003

STORAGE

OUTPUT
APPARATUS

1006

FIG. 21

<table>
<tr><td colspan="2">**INTERNATIONAL SEARCH REPORT**</td><td>International application No.<br>PCT/JP2020/009852</td></tr>
</table>

**A. CLASSIFICATION OF SUBJECT MATTER**

Int. Cl. H04W52/14(2009.01)i, H04W52/24(2009.01)i
FI: H04W52/24, H04W52/14

According to International Patent Classification (IPC) or to both national classification and IPC

**B. FIELDS SEARCHED**

Minimum documentation searched (classification system followed by classification symbols)
Int. Cl. H04W52/14, H04W52/24

Documentation searched other than minimum documentation to the extent that such documents are included in the fields searched
Published examined utility model applications of Japan        1922-1996
Published unexamined utility model applications of Japan      1971-2020
Registered utility model specifications of Japan              1996-2020
Published registered utility model applications of Japan      1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2015-512183 A (INTEL CORP.) 23 April 2015,<br>paragraphs [0013], [0014], [0022], [0023], [0027],<br>[0071], fig. 1 | 1, 4, 5<br>2, 3 |
| A | US 2015/0223180 A1 (KT CORPORATION) 06 August<br>2015, entire text, all drawings | 1-5 |
| A | US 2015/0223181 A1 (KT CORPORATION) 06 August<br>2015, entire text, all drawings | 1-5 |

☐ Further documents are listed in the continuation of Box C.   ☒ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search<br>02.10.2020 | Date of mailing of the international search report<br>13.10.2020 |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**INTERNATIONAL SEARCH REPORT**

Information on patent family members

| International application No. |
| --- |
| PCT/JP2020/009852 |

| Patent Documents referred to in the Report | Publication Date | Patent Family | Publication Date |
| --- | --- | --- | --- |
| JP 2015-512183 A | 23.04.2015 | US 2013/0195025 A1 paragraphs [0018], [0019], [0027], [0028], [0032], [0072], fig. 1 WO 2013/112711 A1 | |
| US 2015/0223180 A1 | 06.08.2015 | JP 2015-529037 A entire text, all drawings US 2014/0016576 A1 WO 2014/010841 A1 | |
| US 2015/0223181 A1 | 06.08.2015 | WO 2014/021589 A1 entire text, all drawings | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010